# EUROPEAN PATENT APPLICATION

(11) **EP 0 949 311 A1**
(43) Date of publication of application: **13.10.1999**
(21) Application number: 98201155.3
(22) Date of filing: 09.04.1998
(51) Int. Cl.: C09K 7/02

(54) **Drilling fluids**

(71) Applicant: Coöperatieve Verkoop- en Productievereniging van Aardappelmeel en Derivaten 'AVEBE' B.A., NL-9641 JA Veendam (NL)
(72) Inventor: Kok, Sjoerd Jan, 9616 TE Scharmer (NL); Kraan, Leendert Cornelis, 9755 PE Onnen (NL); Schuringa, Gerhard Elzo, 9642 LJ Veendam (NL); Guns, Jacobus, 9603 BB Hoogezand (NL); Kesselmans, Ronald Peter Wilhelmus, 9468 KK Annen (NL)
(74) Representative: Smulders, Theodorus A.H.J., Ir.

(57) **Abstract**

The invention relates to methods for drilling wells into subterranean formations containing oil, gas or other minerals for the purpose of extraction and production of said minerals. In particular, the invention relates to drilling fluids used in such methods and the use of starch in such fluids.

The invention provides a method for drilling a well using a drilling fluid comprising a starch obtained from tubers or roots, said starch containing virtually only amylopectine molecules. In a preferred embodiment of the invention, said starch is derived of a genetically modified amylose-free potato.

## Description

The invention relates to methods for drilling wells into subterranean formations containing oil, gas or other minerals for the purpose of extraction and production of said minerals. In particular, the invention relates to drilling fluids used in such methods and the use of starch in such fluids.

Drilling fluids used in methods for drilling production wells are often composed of water to which a wide array of additives, and different combinations thereof, are added to give a drilling fluid the characteristics required for the specific purposes for and circumstances under which it is used. Drilling fluids are for example used to clean and cool the drill bit and to flush to the surface the rock cuttings, stones, gravel, clay or sand that are torn loose by the drill bit. Another purpose is use for minimising formation damage by lining or plastering the walls of the wellbore to prevent caving in and to prevent invasion of solids and liquid into permeable formations, by bridging and sealing with drilling fluid components.

Specific components or additives of drilling fluids are for example properly graded or sized clay (i.e. bentonite or attapulgite clay), salts, silicates, brine, NaCl, CaBr₂, ZnBr₂, NaOH, or others that influence for example solids content, saturation, specific gravity, viscosity and plastering capacities of the fluid. Clay is especially useful since it plasters well and provides a drilling fluid with the necessary viscosity (carrying capacity) to suspend solids and thus carry ground material from out of a wellbore.

Yet other additives, often applied at a lesser concentration than those mentioned above, are specifically added to improve plastering capacities and rheological properties of the fluid. Often specific attention is given to fluid loss and to viscosity and shear stress (rheology) of the fluid, whereby it is desirable to obtain a fluid with high viscosity at low shear and low or relatively low viscosity at high shear.

Examples of such additives are starches obtained from cereals such as corn or rice or from roots or tubers such as potatoes or cassave, and other polysaccharide polymers such as (polyanionic) cellulose and xanthan (xanthomonas) gum.

Starches, both of the common Variety containing both amylose and amylopectine, obtained from both cereals and tubers or roots and of the waxy variety, containing virtually only amylopectine molecules (e.g. 0-5% amylose), obtained from cereals, are widely used in drilling fluids, for example as water binding compound to reduce or counter fluid loss and to increase viscosity in general. However, it is well known that starches tend to degrade at elevated temperatures for extended periods of time. To solve this problem, US patent 4,652,384 for example describes the use of crosslinked waxy corn starch as a fluid loss control additive with a higher viscosity and a better resistance to degradation for use in a drilling fluid better able to withstand the higher temperatures found in deep wells during the drilling process.

Xanthan gum is widely used as viscosifier, it is however expensive and (partial) replacements have been sought. For example US patent 4,822,500 and European patent application 0 770 660 discuss the use of epichlorohydrin crosslinked hydroxypropyl stabilised waxy corn starch in drilling fluid as additive to or replacement of xanthan gum. In EP 0 770 660 it is for example discussed that said starch has nearly as good rheological properties as xanthan gum when used in conventional clay containing drilling fluid, albeit only when used at twice the concentration of xanthan gum. However, the use of said waxy starch to replace xanthan gum in drilling fluid was not found effective in drilling fluids that do not or only little contain clay.

Selection of a drilling fluid and its additives is dependent on a wide range of conditions, of which type of formation (density, composition, porosity, depth, temperature, mineral content), depth and width of drilling, angle under which is drilled, are only a few of the many possible conditions that have to be considered when selecting an appropriate fluid composition. A specific example can be found when it finally comes to drilling in the formation layer wherein the desired mineral, oil or gas is found. Drilling in this so-called production or payzone requires a method that on the one hand minimises formation damage, such as caving in or invasion of liquids or solids in the permeable formation, and at the other hand provides easy access to the mineral, oil or gas in the surrounding formation.

Often, drilling in the payzone occurs at highly deviating angles, or even horizontally, whereby the wellbore is protected during drilling against damage by lining it with a filter cake formed out of components of the drilling fluid. Preferably, at this stage, the drilling fluid only comprises a few insoluble solids or particles such as clay, but mainly comprises soluble salts instead, to minimise the filter cake material from clogging-up the porous formation, thereby damaging the formation around the wellbore in its capacity to finally let the mineral, oil or gas seep to the wellbore, from where it can be pumped out. However, it can not be prevented that solids or particles that originate from the formation itself get incorporated in the filter cake as well, and contribute to clogging-up the porous formation.

It goes without saying that such formation damage is very detrimental to the possibility of extracting sufficient mineral, oil or gas from a well. For example, the possible number of barrels produced per day (and thus profit per year) by an oil well depends heavily upon the formation damage incurred during the final drilling in the payzone.

Formation damage in the payzone can be reduced by carefully selecting an appropriate drilling fluid. As mentioned above, a drilling fluid mainly comprising a soluble salt, and not particles such as found in clay, should be selected. The lack of clay obviates the need for other additives that can help increase viscosity, especially of additives that give high viscosity at low shear (low-end viscosity). Also, considering the depth of drilling at that time, the additives should be quite resistant to high pressure and temperatures, and should not easily get degraded under those conditions.

Often, such fluids contain properly graded, soluble salts and a biopolymer such as xanthan gum. The xanthan gum polymer, together with soluble and insoluble particles therein, plasters the walls of the wellbore, and prevents invasion of liquids and solids in the porous formation. The polymers provide cohesiveness and encapsulates the bridging solids, thereby reducing the chance of irreparable formation damage to occur.

However, the filter cake itself of course also blocks the porous formation, thereby making it still impossible for the mineral, oil or gas to seep through and collect in the wellbore. Especially xanthan gum, which on the one hand is extremely suitable for its low-end viscosity, for its property to line the wellbore and for its stability, is on the other hand detrimental, once it becomes time to collect the mineral, oil or gas.

Specific procedures have been developed for clean-up and removal of a filter cake comprising a xanthan gum polymer. These so-called filter cake breaker treatments are a final step before unhampered production of the well can start.

Two types of breaker treatment exists, external and internal breaker treatment. External treatment comprises the use of thermal, biological, mechanical or chemical degradation of the polymer, by flushing or washing the wellbore with a solution that for examples contains acids, oxidisers or enzymes. The (combined) action of these substances degrades the polymer and allows a dissolution of the soluble solids in the filter cake. However, xanthan gum polymer is particularly resistant to degradation, which now turns out to be disadvantageous. For example, enzymes act in general to slow, oxidisers such as oxygen can easily dissipate from the solution during pumping, and particularly strong acids and long treatment times are needed to fully decompose the polymer, acids which in them self may be causing (local) damage to the porous formation and which are corrosive for the equipment used and which use should be as short as possible.

Internal breaker treatment tries to circumvent these problems by providing the filter cake with components that, so to speak, act from within in breaking the filter cake. Two types of such components exist. One type are particles of acids with limited solubility, another are solid peroxides. Using such components, which are included in a drilling fluid and deposited as a component of the filter cake during the last phase of drilling in the payzone, has inherent disadvantages as well. Any polymer composition containing an acid will start to degrade once the acid dissolves, which may be too soon or too late for any practical purposes, the polymer degradation cannot be time-controlled. Degradation of polymer by peroxide starts by adding an acidic catalyst so that free radicals are formed, and can therefor be controlled in time by providing such an acid in a soak fluid. However, once the polymer has been degraded by the action of the free radicals, the remaining peroxide and the free radicals need to be neutralised by applying yet another solution containing sodiumthiosulphate, otherwise peroxide and free radicals will end up in the environment.

Consequently, there is a need to (partially) replace xanthan gum as an additive to drilling fluid which can be used in many of the various phases of drilling. Such a replacement should have many of the good characteristics of xanthan gum, such as its low-end viscosity, its good lining properties, and its stability and resistance to degradation, and should, depending on its characteristics, preferably not be as expensive as xanthan gum. Although industrial production of the gum can occur on a large scale, its supply may sometimes be restricted because producing it requires a fermentation process, using a bacterial culture with bacteria of the genus *Xanthomonas*. Also, the gum is widely used in other, non-related products, such as food additives, for which there is a broad market.

Furthermore, as explained above, the presence of a xanthan gum polymer in a filter cake lining the wellbore in the payzone requires complicated cleaning procedures to make a profitable exploitation of a well possible.

It is, however, hard to find suitable biopolymers that can do the job. The above described common or even waxy starches, when added to a conventional drilling fluid, are not as effective as xanthan gum in increasing low-end viscosity, when tested in similar concentrations, one needs at least twice as much starch to obtain an effect that is close to that of the gum. Furthermore, said starches only improve low-end viscosity when sufficient clay is present in the drilling fluid, and do not effectively increase the viscosity when the presence of no or only little clay is preferred, as is a prerequisite for a drilling fluid that is used in the payzone.

Furthermore, modifying a starch, for example by cross-linking or hydroxypropylating in general, increases its resistance to degradation, which is of course detrimental when the filter cake has to be removed again from the wellbore to finally let the oil or gas seep in.

The invention provides a method for drilling a well in subterranean formations containing oil, gas or other minerals, such as an oil or gas well, using a drilling fluid comprising a starch obtained from tubers or roots, said starch containing virtually only amylopectine molecules. The method provided by the invention is far superior over methods for well drilling using a drilling fluid comprising a common amylose/amylopectin starch variety or using a drilling fluid comprising a starch obtained from a cereal, such as a waxy corn starch or waxy rice starch containing virtually only amylopectine molecules.

Common starch consists of two major components, an, in essence, linear α(1-4)D-glucan polymer (branching is found at a low level) and a elaborately branched α(1-4 and 1-6)D-glucan polymer, called amylose and amylopectine, respectively. Amylose has a helical conformation with a molecular weight of 10⁴ - 10⁵. Amylopectine consists of short chains of α-D-glucopyranose units primarily linked by (1-4) bonds with (1-6) branches and with a molecular weight of up to 10⁷.

Amylose/amylopectine ratios in plants are generally anywhere at 10-40 amylose/90-60% amylopectine, also depending on the variety of plant studied. In a number of plant species mutants are known which deviate significantly from the above mentioned percentages. These mutants have long been known in maize (corn) and some other cereals. Waxy corn or waxy maize has been studied since the beginning of this century. Therefore, the term waxy starch has often been equated with amylose free starch, despite the fact that such starch was in general not known from other starch sources such as potato but mainly derived from corn. Furthermore, industrial use of an amylose free potato starch has never occurred on a large scale and with such a wide range of applications as waxy starch.

Amylose production in a plant is among others regulated by the enzyme granule-bound starch synthase (GBSS), which is involved in generating the amylose content of starch, and it has been found that many of the waxy cereal mutants described above lack this enzyme or its activity, thereby causing the exclusive amylopectine character of these mutants.

An example of a starch for use in a method provided by the invention is a starch obtained from an amylose-free potato plant which is lacking GBSS activity or GBSS protein altogether, thereby lacking amylose and having virtually only amylopectine molecules.

In a preferred embodiment of the invention, a method is provided wherein the starch is derived from a genetically modified plant such as a potato, yam, manihot or cassave. Genetic modification of such tuber or root plants is a skill available to the artisan, and for example involves modification, deletion of or insertion in or (antisense) reversion of (parts of) a gene, such as a gene encoding granule-bound starch synthase (GBSS), which is involved in determining the amylose content of starch. In order to manipulate such crop plants, efficient transformation systems and isolated genes are available, especially of potato, and others are found by analogy. Traits, such as freedom of amylose, that are introduced in one variety of a crop plant can easily be introduced into another variety by cross-breeding. In the experimental part of this description, methods and means for drilling a well are provided that comprise a starch obtained from a genetically modified potato.

In a preferred embodiment, a method according to the invention is provided wherein said starch is a crosslinked starch. Various cross-linking agents are known, examples are epichlorohydrin, sodium trimetaphosphate, phosphorous oxychloride, chloroacetic acid, adipic anhydride, dichloro acetic acid or other reagents with two or more anhydride, halogen, halohydrin, epoxide or glycidyl groups or combinations thereof which all can be used as crosslinking agents. In the experimental part epichlorohydrin crosslinked starch has been used.

Furthermore, the invention provides a method for drilling a well wherein the starch is stabilised. Stabilisation by hydroxyalkylation or carboxymethylation of starch is obtained with reagents containing a halohydrin, epoxide or glycidyl group as reactive site. Chloro acetic acid (or its salt) is used as carboxymethylation reagent. In a preferred embodiment said starch is stabilised by hydroxypropylation, hydroxybutylation, hydroxyethylation and/or carboxymethylation.

The invention also provides a method wherein said drilling fluid comprises little or no clay or other insoluble particles. It is especially difficult to provide the wanted viscosity to a drilling fluid when said fluid does not comprise clay. However, when drilling in the pay zone or production zone, the presence of clay, or other insoluble particles is unwanted, since these can seriously block a porous formation, to the detriment of productivity. With a drilling fluid, as provided by the invention, however, drilling a well in such a pay zone can occur without blocking the formation while at the same time having the required viscosity. For example, Fann readings found when testing the viscosity of clear brine or other drilling fluids without clay, to which amylopectine potato starch has been added, can read up to more than twice as high than those found when testing the viscosity of clear brine to which waxy corn starch has been added.

Preferred embodiments of the invention are methods of drilling provided by the invention where a well extends into a payzone, especially when said payzone comprises a porous formation. Using a method or means as provided by the invention helps generating a higher productivity of such a well.

The invention has even further advantages over existing methods, drilling fluids and additives of the prior art. In a preferred embodiment, the invention provides a method for drilling a well, preferably in the pay or production zone, further comprising removing filter cake from said well. A method or means as provided by the invention is characterised by the relative ease by which a filter cake is degraded or removed from a wellbore, for example by external breaker treatment. In the experimental part, degradation of drilling fluid additives according to the invention is compared to that of other starch types, for example waxy corn, or of other biopolymers, such as Xanthan gum. Degradation by for example treatment with hydrochloric acid, oxydation with sodium hypochlorite or enzymacic degradation is achieved much more rapidly and completely in the case of a starch additive as provided by the invention, than that which is seen in the case of for example common starch, waxy starch, or even xanthan gum, thereby minimising the need for internal breaker treatment.

The invention also provides a drilling fluid for use in a method according the invention. Such a drilling fluid can be premade, or can be a fluid to which a starch as provided by the invention is added shortly before use, or during or after clearance, recirculation, centrifugation or filtration of drilling fluid which has been used before. In a preferred embodiment of the invention a drilling fluid is provided which is selected from a group of drilling fluids comprising saturated salt/sized salt weighted brine, heavy clear brine, silicate mud and/or formate mud, or other drilling fluids which preferably are used in pay zone drilling.

Furthermore, the invention provides a starch as additive for use in a drilling fluid according to the invention. Such a starch is preferably selected from root or tuber-derived amylose-free or amylopectine starches such as derived from potato starch, tapioca, sweetroot starch, yam starch or manihot starch. In a preferred embodiment of the invention such a root or tuber starch is derived from a genetically modified plant, for example from a genetically modified potato plant variety. An example of such a potato plant variety is the variety Apriori, or varieties derived thereof.

The invention is further explained in the experimental part which is not limiting the invention.

### Experimental part

### Materials and methods

### Drilling fluids

### Saturated salt/kaoline.

This type of drilling fluid is described in the API spec. 13A; section 11; starch and is used as a quality control fluid for starch based fluid loss reducers. This type of fluid is not specially developed for a special section in the formation, but gives on the other hand an idea about the possibilities of starch based products. It's a well known fluid in the whole world.

Saturated salt/sized salt wighted brine/heavy clear brine.

This type of fluid is specially used in the "payzone" and based on the addition of sized salt as a weighting material and in combination with polymers, as a fluid loss reducer.
When a well bore penetrates a desired oil containing formation, insoluble materials in the drilling fluid (clay, barites, etc.) may damage the formation. A filtercake of this materials is formed and some solids of the filtercake may penetrate into the formation which in turn can result in a permanent reduction of the permeability and oil producing ability of the formation. In order to help prevent damage-to producing formations during the drilling and completion of well bores penetrating such formations and during work-over procedures, the brines, utilised, must have very high densities, in order to prevent the pressurised fluids from blowing out of the wellbore.
Because of the solubility of the used salts (saturated and/or supersaturated), these brines are non-damaging (the supersaturated brines can afterwards be diluted with water and no solid particles remain).

### Silicate mud.

Silicate muds are meant as environmental friendly substitutes for "oil based" muds. Silicate muds have very good fluid loss reducing properties, depending on the precipitation of Ca- and Mg-silicate on the wall of the bore-hole. In situations where the formation is more porous, polymeric fluid loss reducers are necessary.

Plastering- and rheology properties are obtained by combinations of starch and PAC's. Rheology is important in connection with the "carrying capacity" of the mud, especially in horizontal wells.

### Formate mud.

Formate minds are used as heavy clear brines (sodium-, potasium- and cesium formate) under the same circumstances and in the same formations like clear heavy brines based on alkaline earth metal halides (Ca- and ZnBr₂). Advantages of formates, in comparison with the alkaline earth-metal halides, are their biodegradability, they are divalent metal free, have low toxicity, are less corrosive towards ferrous-based metals, and have very good compatibility with water soluble polymers, protecting these polymers under high temperature conditions (150°C) and reducing the chances on formation damage

### Crosslinking and stabilising starches

Crosslinking, and/or hydroxyalkylation and/or carboxymethylation of (amylopectin) starch is performed under semi dry reaction conditions, in suspension (water or organic solvent), in agueous solution (dispersion), or during the gelatinisation of the starch granules. Preferably, water is the solvent during the suspension reaction. The reaction in aqueous solution is preferably performed with less than 80 weight% of water. More preferably with a water content between 20 and 60 weight% of water. An autoclave in combination with a dryer (drum dryer; spray dryer) or extruder is then used as reaction section.

In case of crosslinking in combination with stabilising by hydroxyalkylation and/or carboxymethylation, these reactions are performed simultaneously or in any subsequent order to each other.

For crosslinking, starch can be treated with reagents possessing two or more reactive groups. The crosslinking agents are attached to starch by ester and/or ether groups. Epichlorohydrin, sodium trimetaphosphate, phosphorous oxychloride, chloroacetic acid, adipic anhydride, dichloro acetic acid or other reagents with two or more anhydride, halogen, halohydrin, epoxide or glycidyl groups or combinations of them can be used as crosslinking agents. Preferably the crosslinking agent is attached to starch by ether groups. Starch crosslinked by epichlorohydrin is herein called ECH-starch.

Stabilisation by hydroxyalkylation or carboxymethylation of starch is obtained with reagents containing a halohydrin, epoxide or glycidyl group as reactive site. Chloro acetic acid (or its salt) is used as carboxymethylation reagent. The alkylchain of the hydroxyalkylating agent can vary from 1 - 20 carbon atoms, preferably from 1-12 carbon atoms, more preferably from 2 - 4 carbon atoms, for example ethylene oxide, propylene oxide, butylene oxide, allyl glycidyl ether, propyl glycidyl ether, butyl glycidyl ether, lauryl glycidyl ether can be used. Preferably propylene oxide is used to hydroxyalkylate the starch. Hydroxypropylated starch is herein called HP-starch. Carboxymethylated starch is herein called CM-starch.

### Testing rheology and fluid loss.

### Rheology:

### Fann readings.

Measurements have been done with a 6 speed Direct Indicating Viscometer, according API spec. 13A ; sec 11, starch (Drilling Fluid Materials) and API spec. 13D (Recommended Practice on the Rheology and Hydraulics of Oil Well Drilling Fluids). The instrument used is a Fann Model 35SA. All tests have been carried out at 25°C. with the given fluid compositions. (see tables)

### Brookfield.

Measurements have been done at a low shear rate of 0.47 sec⁻¹ with a Brookfield Rheometer Type DV II +, spindle 21 ; 0.5 rpm.

### Fluid loss:

Measurements have been done according API spec. 13A; sec.11, starch. (Drilling Fluid Materials) All tests have been carried out at 25°C. with the given fluid compositions. (see tables)

### Examples

Examples 1 to 4 and 9 relate mostly to rheology with crosslinked starches, examples 5 to 8 relate mostly to rheology with crosslinked and hydroxypropylated (ECH/HP) or carboxymethylated (ECH/CM) or hydroxypropylated and carboxymethylated (ECH/HP/CM) starches added. Examples 10 to 13 relate to degradation of starch products and xanthan gum.

| Code of starch products | | | |
|---|---|---|---|
| | ECH | HP | CM |
| Cold water swellable starch | - | - | - |
| Crosslinked starch | + | - | - |
| Crosslinked hydropropylated starch | + | + | - |
| Crosslinked carboxymethylated starch | + | - | + |
| Crosslinked hydroxypropylated and carboxymethylated starch | + | + | + |

### Example 1

### Rheology of saturated salt / kaolinite clay

### Composition:

- 350 ml.: saturated salt water
- 35 g: API Evaluation Base Clay
- 1 g: NaHCO₃
- 10 g: starch product

Preparation- and testing procedures : according API specification 13A (May 1 , 1993) section 11; starch.

The filtrate loss is measured after 30 minutes.
The Brookfield viscosity is measured with Brookfield type DV 11 + , spindle 21; 0.5 rpm, shear rate 0.47 sec⁻¹.

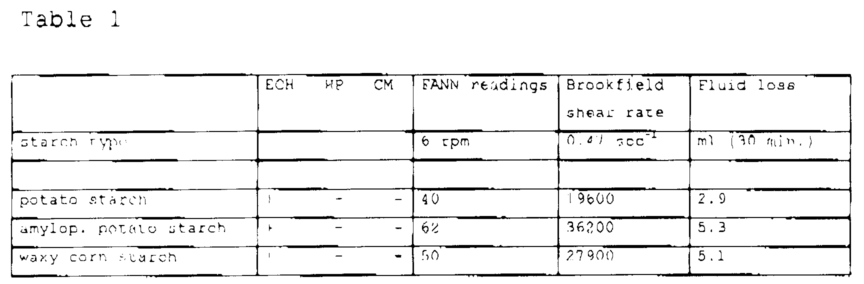

Best viscosity at low end is found with the amylopectin starch product, with for example Fann readings at least 20% higher than waxy (amylopectin) corn starch.

### Example 2

### Rheology of saturated salt water / sized salt (NaCl)(sized salt system)

### Composition :

- 262.5 ml: saturated salt water
- 0.6 g: Xanthan gum
- 7.0 g: starch product
- 190.0 g: sized salt (NaCl)
- s.g. 1.44:

Preparation : see U.S. pat.nr. 4,822,500 ; Texas Un. Chem. Corp.
The Brookfield viscosity is measured with Brookfield type DV 11 +, spindle 21; 0.5 rpm, shear rate 0.47 sec⁻¹.

**Table 2**

| | ECH | HP | CM | FANN readings | FANN readings | Brookfield shear rate | Fluid loss |
|---|---|---|---|---|---|---|---|
| starch type | | | | 600 rpm. | 6 rpm. | 0.47 sec⁻¹ | ml (30 min.) |
| | | | | | | | |
| Potato starch | + | - | - | 296 | 31 | 20600 | 2.8 |
| Amylopect potato starch | + | - | - | 292 | 48 | 27500 | 2.7 |
| Waxy corn starch | + | - | - | 250 | 36 | 22500 | 2.6 |
| Potato starch | - | - | - | 144 | 4 | 500 | 0.5 |

Best viscosity at low end is found with the ECH-amylopectin starch product.

### Example 3

### Rheology in heavy clear brine (CaBr₂)

Composition: 530 g CaBr₂ 84% in 1000 ml. demiwater.

In 350 ml of this solution , stir in 15 g starch product.

s.g. 1.33

Preparation of the mud: Stir 15 gr. of starch product, during 20 minutes, in 350 ml of the mentioned CaBr₂ solution, with a Multi Mixer, conditioning of the mud for 16 hrs. at 25°C and stir for 5 minutes again, followed by the measurements , according the API 13A spec's.

**Table 3**

| | ECH | HP | CM | FANN readings | FANN readings | Brookfield shear rate | Fluid loss |
|---|---|---|---|---|---|---|---|
| product type | | | | 600 rpm. | 6 rpm. | 0.47 sec⁻¹ | ml (30 min.) |
| | | | | | | | |
| crossl. Potato starch | + | - | - | 260 | 13 | 1600 | 11.0 |
| crossl.amylopect potato starch | + | - | - | >300 | 40 | 12000 | 19.5 |
| crossl. Waxy corn starch | + | - | - | 218 | 18 | 3500 | 15.0 |
| normal potato starch | - | - | - | 47 | 1 | ca. 100 | >200 |
| amylopect. potato starch | - | - | - | 60 | 1 | ca. 100 | >200 |

Best viscosity at low end is found with the ECH-amylopectin starch product, here with Fann readings 100% higher than with waxy corn starch.

### Example 4

### Rheology of silicate mud.

### Composition:

- 150 g of: prehydrated bentonite (10%)
- 150 ml: demi water
- 20 g: KCl
- 1 g: xanthan gum
- 10 g: starch product
- 17.5 ml: silicate solution (2.00)
- total volume:
- 350 ml: with demi water

Preparation of the mud according as described in SPE paper IADC/SPE 35059; Silicate-Based Drilling Fluids ; March 1996.

**Table 4**

| | ECH | HP | CM | FANN readings | FANN readings | Brookfield shear rate | Fluid loss |
|---|---|---|---|---|---|---|---|
| starch type | | | | 600 rpm. | 6 rpm. | 0.47 sec⁻¹ | ml (30min.) |
| | | | | | | | |
| potato starch | + | - | - | 120 | 36 | 25100 | 4.2 |
| Amylopectine potato starch | + | - | - | 158 | 78 | 54800 | 4.5 |
| waxy corn starch | + | - | - | 139 | 66 | 45800 | 4.4 |

Best viscosity at low end is found with the ECH-amylopectin starch product.

### Example 5

### Saturated salt water.

Composition and test conditions : see example 1.

**Table 5**

| starch type | ECH | HP | CM | FANN readings | Brookfield shear rate | Fluid loss |
|---|---|---|---|---|---|---|
| | | | | 6 rpm | 0.47 sec⁻¹ | ml(30 min.) |
| potato starch | + | + | - | 46 | 21500 | 2.8 |
| amylopect. potato starch | + | + | - | 59 | 22500 | 5.2 |
| waxy corn starch | + | + | - | 45 | 19400 | 4.8 |

Rheology is best with amylopectin potato starch product

### Example 6

### Saturated salt water/ sized salt.

Composition and testconditions: see table 2.

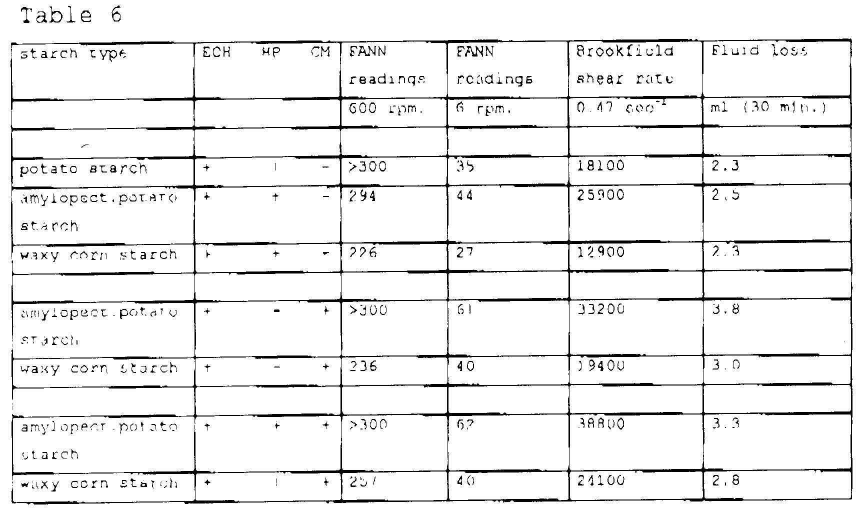

Rheology is in every case best with amylopectin potato starch product

**Table 6a**

| | | | | | | | |
|---|---|---|---|---|---|---|---|
| Same composition as for table 2 and 6 (saturated salt /sized salt), however, without Xanthan gum and with 10 g of starch product instead of 7 g | | | | | | | |

| basic starch | ECH | HP | CM | FANN readings | FANN readings | Brookfield shear rate | fluid loss |
|---|---|---|---|---|---|---|---|
| | | | | 600 rpm. | 6 rpm. | 0.47 sec⁻¹ | ml (30 min.) |
| | | | | | | | |
| potato starch | + | + | - | <300 | 27 | 1300 | 1.5 |
| amylopect potato starch | + | + | - | 300 | 39 | 17200 | 1.7 |
| waxy corn starch | + | + | - | 101 | 11 | 5700 | 1.7 |

Rheology is best with amylopectin potato starch product, note the sharp decline in rheology of waxy corn starch product. Amylopectin potato starch product can replace Xanthan gum far better than waxy corn starch product.

### Example 7 and 8

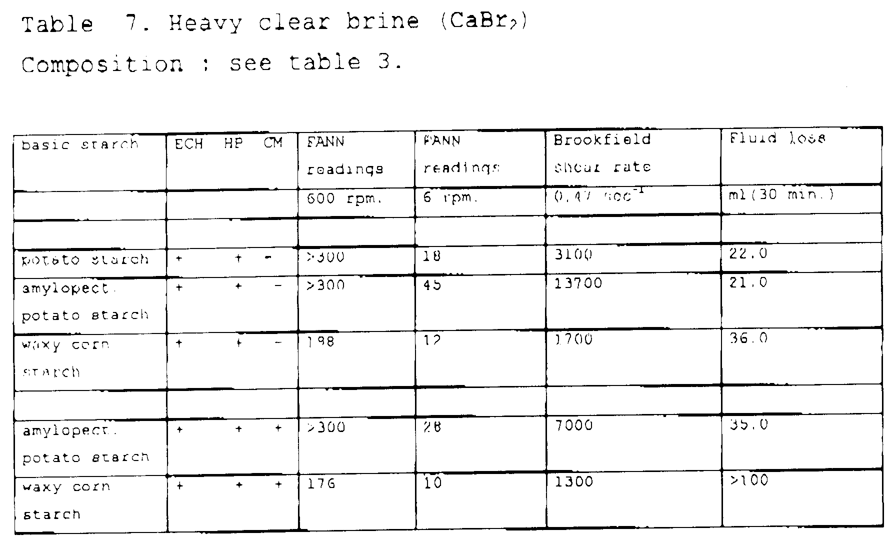

**Table 8**

| Silicate mud. | | | | | | | |
|---|---|---|---|---|---|---|---|
| Composition : see table 4. | | | | | | | |

| basic starch | ECH | HP | CM | FANN readings | FANN readings | Brookfield shear rate | Fluid loss |
|---|---|---|---|---|---|---|---|
| | | | | 600 rpm. | 6 rpm. | 0.47 sec⁻¹ | ml (30 min.) |
| | | | | | | | |
| potato starch | + | + | - | 150 | 55 | 27900 | 4.0 |
| amylopect. potato starch | + | + | - | 198 | 92 | 62000 | 4.5 |
| waxy corn starch | + | + | - | 156 | 73 | 47100 | 4.5 |

Rheology is in every case best with amylopectin potato starch product

### Example 9

### Rheology of formate mud.

### Composition:

- 350 ml: Potassium formate (75% sol.)
- 0.5 g: Xanthan gum
- 10.0 g: Starch product
- 20.0 g: Dolomite
- 0.5 g: K₂CO₃

**Table 9**

| starch type | ECH | HP | CM | FANN readings 600 rpm | FANN readings 6 rpm | Brookfield shear rate | Fluid loss ml (30 min.) |
|---|---|---|---|---|---|---|---|
| | | | | | | 0.47 sec⁻¹ | |
| potato starch | + | - | - | >300 | 11 | 2000 | 0.5 |
| amylopact. potato starch | + | - | - | 296 | 14 | 2800 | 0.2 |
| waxy corn starch | + | - | - | 199 | 6 | 700 | 0.6 |

Rheology is in best with amylopectin potato starch product

### Example 10

Degradation of starch products with hydrochloric acid according U.S. patent 4,090,968, Water loss reduction agents, Chemical Additives Comp. , May 1978. Fluid loss measurements have been done with the solutions of the products in demi water and in a 7.5% hydrochloric acid solution.

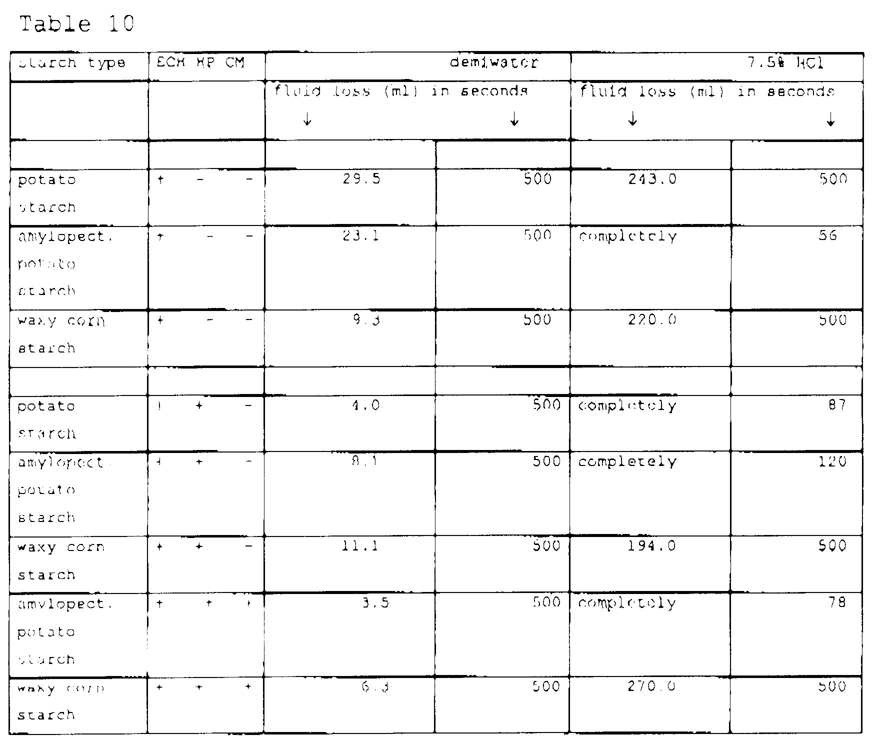

Degradation goes best with amylopectine potato starch products.

### Example 11.

Degradation by oxydation with sodium hypochlorite. Procedure: Dissolve 8 g of a starch product in 175 ml demi water with a mechanical stirrer at 800 rpm. during 25 minutes, dilute with 175 ml of demi water and stir for another 5 minutes.

To 350 ml of this starch solution 1.5 ml of sodium hypochlorite solution (containing 145 g of Cl₂ / litre) is added, heated on a waterbath till 65°C, conditioned for 15 minutes at this temperature, cooled down till 25°C . Thereafter the degradation is measured by the filtration test, mentioned as for example 10.

**Table 11**

| starch type | ECH | HP | CM | fluid loss(ml) | per x seconds |
|---|---|---|---|---|---|
| | | | | ↓ | ↓ |
| potato starch | + | - | - | 94 | 500 |
| amylopect. potato starch | + | - | - | 295 | 500 |
| waxy corn starch | + | - | - | 48 | 500 |

Degradation goes best with amylopectine potato starch products.

### Example 12.

Enzymatic degradation by α-amylase. Procedure: as described for Table 11, under the next conditions: To 350 ml of the starch solution (pH 6.4) 10 ml of a diluted α-amylase solution is added, mixed up during 15 minutes, heated on a waterbath till 85°C and cooled down till 25°C . The degradation is measured as described for Table 10.

**Table 12**

| starch type | ECH | HP | CM | fluid loss (ml) | per x seconds |
|---|---|---|---|---|---|
| | | | | ↓ | ↓ |
| potato starch | + | - | - | 295 | 500 |
| amylopect. potato starch | + | - | - | 300 (completely) | 110 |
| waxy corn starch | + | - | - | 130 | 500 |

### Example 13.

The degradation of xanthan gum with hydrochloric acid, sodium hypochlorite and α-amylase respectively Procedure: Same as for the corresponding examples 10, 11 and 12.

**Table 13**

| degradation medium | fluid loss (ml.) after 500 seconds |
|---|---|
| | |
| hydrochloric acid | 10 |
| sodium hypochlorite | 130 |
| α-amylase | 80 |

### Discussion of experimental part

### Rheology and fluid loss:

In all mentioned drilling fluids the highest viscosity , at low shear rates is found with the amylopectin potato starch based products. Also the fluid losses with these products are the same or better, in comparison with the other starches and derivatives made of those.

### 2. Degradability:

In all three used degrading solutions, the products based on amylopectin potato starch are by far the best degradable and will give, because of that, low sludge quantities in the production zone (pay zone) and guarantee a good production level of the crude oil or gas. Xanthan gum is very difficult to degrade with the three degradation media.

3. In a lot of cases where Xanthan gum is used, it can be replaced by an amylopectin potato starch based product, giving an advantage on price / performance ratio.

## Claims

1. A method for drilling a well into subterranean formations containing oil, gas or other minerals using a drilling fluid comprising a starch obtained from tubers or roots, said starch containing virtually only amylopectine molecules.

2. A method according to claim 1 wherein said starch is derived from a genetically modified plant.

3. A method according to claim 2 wherein said plant is a potato plant.

4. A method according to any of claims 1 to 3 wherein said starch is a crosslinked starch.

5. A method according to claim 4 wherein said starch is crosslinked by using epichlorohydrine.

6. A method according to any of claims 1 to 5 wherein said starch is stabilised.

7. A method according to claim 6 wherein said starch is stabilised by hydroxypropylation and/or carboxymethylation.

8. A method according to any of claims 1 to 7 wherein said drilling fluid comprises little or no clay or other insoluble particles.

9. A method according to any of claims 1 to 8 wherein said well extends into a payzone and wherein said starch containing virtually only amylopectine molecules is used at least when drilling the payzone.

10. A method according to claim 9 wherein said payzone comprises a porous formation.

11. A method according to claim 10 further comprising removing filter cake from said well.

12. A method according to claim 11 wherein said filter cake is removed by external breaker treatment.

13. A drilling fluid for use in a method according to any one of above claims.

14. A drilling fluid according to claim 13 selected from a group of drilling fluids comprising saturated salt/kaolin, saturated salt/sized salt weighted brine, heavy clear brine, silicate mud and/or formate mud.

15. A starch for use in a drilling fluid according to claim 13 or 14.

16. A starch according to claim 15 selected from root or tuber-derived amylopectine starches such as potato starch or tapioca.

17. A starch according to claim 16 wherein said root or tuber is derived from a genetically modified plant.
